# EUROPÄISCHE PATENTSCHRIFT

(11) **EP 0 900 616 B1**
(45) Veröffentlichungstag und Bekanntmachung des Hinweises auf die Patenterteilung: **02.06.2004**
(21) Anmeldenummer: 98116700.0
(22) Anmeldetag: 03.09.1998
(51) Int. Cl.: B23D 61/02, B23D 61/12

(54) **Sägeblatt mit Sägezahnkonfiguration und Verfahren zu seiner Herstellung**
Saw blade with saw teeth configuration and method for its production
Lame de scie à configuration de dents de sciage et procédé pour sa fabrication

(30) Priorität: 08.09.1997 DE 19739074
(43) Veröffentlichungstag der Anmeldung: 10.03.1999
(73) Patentinhaber: WIKUS-Sägenfabrik Wilhelm H. Kullmann GmbH & Co. KG., 34286 Spangenberg (DE)
(72) Erfinder: Kullmann, Jörg H. Dr., 34286 Spangenberg (DE); Fluhrer, Manfred Dipl.-Ing., 34286 Spangenberg (DE)
(74) Vertreter: Patentanwälte Rehberg + Hüppe

(56) Entgegenhaltungen:
- DE-U- 9 311 471
- FR-A- 2 707 904
- US-A- 4 727 788

## Beschreibung

Die Erfindung bezieht sich auf ein Sägeblatt mit einer sich wiederholenden Gruppe von Zähnen, die aus einem ungeschränkten gephasten Führungszahn mit einem im Vergleich zu seiner Breite kleineren, in der Mitte seiner Zahnspitze angeordneten wirksamen Schnittkantenabschnitt und einer vorzugsweise geraden Anzahl geschränkter Folgezähne besteht, wobei der Führungszahn eine größere Zahnhöhe als jeder der Folgezähne aufweist. Die Erfindung kann sowohl bei einem Bandsägeblatt, also einem Sägeblatt mit linearer Anordnung der Zähne hintereinander, als auch bei einem Kreissägeblatt angewendet werden. Es ist in der Regel nur ein einziger Führungszahn in der Gruppe vorgesehen. Die Folgezähne können untereinander gleiche, aber auch ungleiche - insbesondere paarweise - Zahnhöhe aufweisen. Die Erfindung läßt sich insbesondere an einem Grundband aus Bimetall anwenden.

Aus der DE 43 24 411 A1 ist ein Sägeblatt der eingangs beschriebenen Art bekannt, welches an einem Grundkörper sowohl ungeschränkte als auch geschränkte Zähne aufweist, deren Zahnspitzen aus einem Material bestehen, das härter als das Material des Grundkörpers ist. Es kann sich dabei z.B. um Wolframcarbid, aber auch um Schnellstahl handeln. Die Zähne sind in sich wiederholender Gruppe angeordnet, wobei die kleinste Gruppe aus einem geraden Führungszahn und zwei nach rechts und links geschränkten Folgezähnen besteht. Der Führungszahn besitzt eine Zahnhöhe, die größer ist als die gemeinsame Zahnhöhe der beiden Folgezähne. Der Führungszahn ist gephast, besitzt also in der Mitte der Zahnspitze einen gerade verlaufenden Schnittkantenabschnitt, an den sich in symmetrischer Anordnung rechts und links je ein geneigt verlaufender Schnittkantenabschnitt anschließt. Der Unterschied in der Zahnhöhe zwischen dem Führungszahn und den Folgezähnen sowie der Phasenwinkel sind derart groß gewählt, daß in der Projektion der Zähne in Bandlaufrichtung die inneren Ecken der Folgezähne innerhalb des Umrisses des Führungszahns und die äußeren Ecken des Führungszahn innerhalb der Umrisse der Folgezähne liegen, so daß die jeweils abgeschatteten Ecken nicht arbeiten. Die Schnittkanten sämtlicher Zähne sind durch Schleifen hergestellt, also durch eine zwar präzise aber auch aufwendige Formgebung, die auch die beiden unterschiedlichen Zahnhöhen erbringt.

Auch aus der DE 36 11 063 A1 ist ein Sägeblatt der eingangs beschriebenen Art mit einer Gruppe von Zähnen aus einem Führungszahn und mehreren Folgezähnen bekannt, die in sich wiederholenden Zyklen vorgesehen sind. Der Führungszahn besitzt dabei die größte Höhe und die Zahnhöhe nimmt in der Gruppe ab, kann aber an den Folgezähnen auch gleich sein. Die Folgezähne sind als geschränkte Zähne ausgebildet und in der Regel abwechselnd nach links und rechts geschränkt vorgesehen, um auf diese Art und Weise die Breite des Schnittkanals größer zu gestalten als die Breite des Grundkörpers des Sägeblatts. Der Führungszahn kann auch gephast sein. Die Herstellung der unterschiedlich hohen Zähne erfolgt durch einen entsprechenden Fräsvorgang oder mit einem Werkzeug, bei dem die Zahnspitzen durch eine Schlagkraft in Laufrichtung des Sägebandes gebogen werden. Es schließt sich ein Schleifvorgang an, um die Schnittkanten der Zähne mit der vorgesehenen Höhenstufung zu erzeugen. Der wirksame Anteil der geschliffenen Schnittkanten nimmt in ihrer Länge von Zahn zu Zahn in der Gruppe ab, so daß die wesentliche Schnittarbeit von dem Führungszahn zu leisten ist und die beiden Folgezähne im wesentlichen nur eine Verbreiterung des Schnittkanals bewirken, damit ein Freischnitt erreicht wird.

Aus der DE 33 00 791 C2 ist ein Sägeblatt mit sich wiederholenden Gruppen von Zähnen aus mehreren aufeinanderfolgenden hohen und mehreren auffeinanderfolgenden niedrigen Zähnen bekannt. Die erste Gruppe aus gleich hohen Zähne enthält geschränkte und ungeschränkte Zähne. Die zweite Gruppe aus gleich niedrigen Zähne enthält ebenfalls geschränkte und ungeschränkte Zähne. Jede Gruppe kann aber auch Zähne beider Höhen aufweisen. Jeder Zahn weist erste und zweite, voneinander unterschiedliche Spanwinkel und erste und zweite, voneinander unterschiedliche Freiwinkel auf. Die beiden unterschiedlichen Span- und Freiwinkel können an jedem einzelnen Zahn durch plastische Verformung der Zahnspitze, insbesondere durch einen Stauchvorgang, mit einem Druckstempel erzeugt werden, der unter einem spitzen Winkel zur Laufrichtung des Sägebandes bewegt wird. Dabei verringert sich auch die Zahnhöhe. Das Maß der Stauchung kann durch Einstellen oder Steuern des Hubes des Druckstempels eingestellt oder gesteuert werden. Die Formgebung der Zähne kann auch ohne Stauchen durch Fräsen oder Schleifen erfolgen. Durch die plastische Verformung eines Zahnes nach dem anderen kann eine Folge von Zähnen gebildet werden, bei der zwischen den hohen Zähnen der ersten Gruppe und den niedrigen Zähnen der zweiten Gruppe eine Höhendifferenz besteht und die beiden Spanwinkel und die beiden Freiwinkel an jedem Zahn erzeugt werden. Auch unterschiedliche Einschweiftiefen und unterschiedliche Teilungen können innerhalb jeder der beiden Gruppen verwirklicht werden. Es ist nicht erkennbar, ob die hohen und die niedrigen Zähne durch die plastische Verformung unterschiedliche oder gleiche Spanwinkel erhalten. Weiter bleibt offen, ob die nach der plastischen Verformung entstehende Höhendifferenz der Zähne bei einem vorangehenden Fräsvorgang vorgebildet wird oder nicht.

Der Erfindung liegt die Aufgabe zugrunde, ein vergleichsweise einfach herstellbares Sägeblatt der eingangs beschriebenen Art bereitzustellen, welches vorteilhaft sehr große Spanwinkel aufweist, ein reduziertes Schwingungverhalten besitzt und bei dessen Gebrauch eine unterschiedliche Spanschuppenfrequenz entsteht.

Erfindungsgemäß wird dies bei einem Sägeblatt der eingangs beschriebenen Art dadurch erreicht, daß jedenfalls alle Folgezähne im Bereich ihrer Zahnspitzen je eine untereinander unterschiedliche plastische Verformung durch Materialverlagerung in Bandlaufrichtung aufweisen, und daß jeder Folgezahn durch die unterschiedliche plastische Verformung einerseits je einen vergrößerten positiven Spanwinkel und andererseits jeweils eine gegenüber dem Führungszahn verringerte Zahnhöhe aufweist.

Die Erfindung geht von dem Gedanken aus, mindestens an den Folgezähnen in erster Linie durch die unterschiedliche plastische Verformung der betreffenden profilierten Zahnspitzen letztlich unterschiedliche positive Spanwinkel zu bilden. Die Profilierung der Zähne vor der plastischen Verformung kann insbesondere durch Fräsen, aber auch durch Schleifen oder Stanzen oder auch durch energiereiche Strahlverfahren erfolgen. Unter "unterschiedlich" werden einerseits bereits solche Unterschiede verstanden, die infolge herstellungsbedingter Toleranzen auftreten bzw. unvermeidbar sind. So können z.B. bereits bei der Herstellung des Fräsers oder der profilierten Schleifscheiben größere Toleranzen zugelassen werden. Während bisher angestrebt wird, die Toleranzen möglichst klein zu halten, nutzt die Erfindung den gegenteiligen Weg. Gleiches gilt für die Herstellung und den Antrieb sowie die Steuerung des Werkzeuges für die plastische Verformung. Andererseits können aber auch vergleichsweise größere Unterschiede zugelassen bzw. bewußt angetrebt werden, beispielsweise dadurch, daß die Folgezähne bereits mit unterschiedlichen Zahnhöhen, insbesondere paarweise auf unterschiedlichen Höhenniveaus, profiliert und unter Anwendung gleicher oder ungleicher Verformungshübe die Zahnspitzen unterschiedlich plastisch verformt werden. Die dabei nach der plastischen Verformung erreichbaren positiven Spanwinkel sind in der Regel vorteilhaft größer als die allein durch einen Fräs- oder Schleifvorgang mit Hinterschnitt erzielbaren positiven Spanwinkel. Die unterschiedliche plastische Verformung zumindest der Folgezähne geschieht durch eine Materialverdrängung oder -verlagerung in der Hauptebene des Sägeblattes. Die Materialverdrängung erfolgt in der Regel schräg zur Bandlaufrichtung, also mit einer sich in Bandlaufrichtung auswirkenden Komponente, sodaß das Material im Bereich der Zahnspitzen der Folgezähne volumenkonstant in eine andere Lage gebracht wird. Dabei entstehen gleichzeitig zwei wesentliche Merkmale, nämlich ein in positiver Richtung vergrößerter Spanwinkel und eine verringerte Höhe oder verringerte Höhen an den Folgezähnen, immer im Vergleich zu den Rohzähnen nach deren Profilierung. Besonders vorteilhaft ist es, wenn die Folgezähne paarweise unterschiedlich plastisch verformt werden. Dabei können die Paare von Folgezähnen auf unterschiedlichen Höhenniveaus zueinander und zu dem oder den Führungszähnen plastisch verformt werden. Die unterschiedliche plastische Verformung der Paare von Folgezähnen auf unterschiedlichen gestuften Höhenniveaus wird immer in Abstimmung auf unterschiedliche Schränkweiten vorgenommen. Das Paar von Folgezähnen, welches auf dem kleinsten Höhenniveau angeordnet ist, besitzt dabei die größte Schränkweite. Das Paar von Folgezähnen, welches auf dem größten Höhenniveau angeordnet ist, besitzt dabei die geringste oder kleinste Schränkweite. Die Paare von Folgezähnen, die höhenmäßig dazwischen angeordnet sind, besitzen auch eine dazwischenliegende Schränkweite. Dies alles hat mit der Reihenfolge der Zähne in der Gruppe nichts zu tun. Innerhalb der Gruppe ist die Reihenfolge der Zähne, also des oder der geraden Führungszähne und der geschränkten Folgezähne, beliebig. Es kommt nur auf die Projektion der Zähne in Bandlaufrichtung an. Selbst die beiden Zähne eines Paares von Folgezähnen müssen nicht unmittelbar aufeinanderfolgend in der Gruppe angeordnet sein. Die beiden Zähne eines zusammengehörigen Paares von Folgezähnen, die auf (etwa) gleichem Höhenniveau angeordnet sind, können durch einen Führungszahn getrennt sein. Es ist durchaus nicht nachteilig, wenn die beiden Zähne eines zusammengehörigen Paares von Folgezähnen, die auf (etwa) gleichem Höhenniveau angeordnet sind, im Vergleich zueinander (etwas) unterschiedliche Spanwinkel und (etwas) unterschiedliche Höhen aufweisen. In allen Fällen werden die Folgezähne nach der plastischen Verformung nicht geschliffen, aber nachfolgend an die plastische Verformung der Zahnspitzen geschränkt.

Das erfindungsgemäße Sägeblatt weist eine Reihe von Vorteilen auf. Durch die unterschiedlichen Spanwinkel infolge unterschiedlicher plastischer Verformung unter Zulassung größerer Toleranzen reduziert sich das Schwingungsverhalten des Sägeblattes beim Sägen dahingehend, daß eine unterschiedliche Spanschuppenfrequenz entsteht. Es sind extrem große positive Spanwinkel erreichbar, die durch einen Fräs- oder Schleifvorgang allein nicht herstellbar sind. Durch die plastische Verformung der Zahnspitzen, die z.B. durch Stauchen oder Rollen, erreicht werden kann, bekommt die profilierte Schnittkante eine größere Schärfe. Dabei wird auch der beim Fräsen oder Schleifen gebildete Grat in Laufrichtung des Sägeblattes umgelegt. Das erfindungsgemäße Sägeblatt läßt sich schließlich sehr einfach und preisgünstig herstellen, insbesondere dadurch, daß die Folgezähne in einer oder mehreren Gruppen gemeinsam bzw. weitgehend gleichzeitig plastisch verformt werden. Die unterschiedliche plastische Verformung kann auf unterschiedlichen Höhenniveaus durchgeführt werden. Diese unterschiedlichen Höhenniveaus können durch eine proportionale Stufung miteinander verbunden sein. Beispielsweise ist es für eine Gruppe von 7 Zähnen sinnvoll, den Führungszahn, der nach der Profilierung einen Spanwinkel von etwa 10° aufweisen kann, plastisch so zu verformen, daß er danach einen Spanwinkel von etwa 15° aufweist. Der Führungszahn weist die größte Höhe auf. Die Folgezähne können nach der Profilierung ebenfalls einen Spanwinkel von 10° aufweisen. Das erste Paar Folgezähne wird vergleichsweise stärker plastisch verformt. Es bekommt einen Spanwinkel von etwa 17°, eine Höhendifferenz -x gegenüber dem Führungszahn und eine Schränkweite (abzüglich Bandbreite) von etwa einem Drittel der maximalen Schränkweite des am meisten verformten Paares von Folgezähnen. Das zweite Paar Folgezähne wird vergleichsweise noch stärker plastisch verformt. Es bekommt einen Spanwinkel von etwa 19°, eine Höhendifferenz -2x gegenüber dem Führungszahn und eine Schränkweite von etwa zwei Drittel der maximalen Schränkweite des am meisten verformten Paares von Folgezähnen. Das dritte Paar Folgezähne wird vergleichsweise am stärksten plastisch verformt. Es bekommt einen Spanwinkel von etwa 21°, eine Höhendifferenz -3x gegenüber dem Führungszahn und die maximale Schränkweite. Die Reihenfolge der Zähne in der Gruppe ist beliebig. Entsprechendes gilt für andere Zähnezahlen in der Gruppe. Die Folgezähne weisen links und rechts geschränkte Zähne auf, die paarweise auf gleichem Höhenniveau und mit derartiger Schränkung angeordnet sind, daß in der Projektion sämtlicher Zähne in Bandrichtung jeweils paarweise diskrete Zerspanungsbereiche entstehen, die sich nicht mit Zerspanungsbereichen anderer Zähne überlappen. Die Zerspanungsbereiche der Zähne schließen seitlich aneinander an.

Auch der Führungszahn kann im Bereich seiner Zahnspitze eine im Vergleich zu der Verformung der Folgezähne unterschiedliche plastische Verformung aufweisen, so daß er durch die plastische verformung einerseits einen vergrößerten positiven Spanwinkel und andererseits gegenüber den Folgezähnen eine vergleichsweise weniger verringerte Zahnhöhe aufweist. Die Herstellung der Rohzähne in der Gruppe erfolgt durch einen Fräsvorgang, wobei insbesondere sämtliche Zähne einer Gruppe gemeinsam gefräst werden. Die so erzeugten Rohzähne können übereinstimmende, aber auch unterschiedliche Gestalt aufweisen, insbesondere hinsichtlich der Zahnhöhe und/oder eines oder mehrerer positiver oder neutraler Spanwinkel sowie Freiwinkel.

Der Führungszahn kann im Bereich seiner Zahnspitze einen positiven Spanwinkel im Bereich zwischen 5° und 25° - insbesondere etwa 15° - und die Folgezähne im Bereich ihrer Zahnspitzen positive Spanwinkel im Bereich zwischen 5° und 30° - insbesondere etwa zwischen 17° und 21° - aufweisen. Die wirksamen Spanwinkel der Folgezähne sind in der Regel größer als der wirksame Spanwinkel des Führungszahns, weil die Folgezähne in der Regel stärker plastisch verformt sind als der Führungszahn. Dies kann auf der Höhendifferenz basieren. Insbesondere können die Folgezähne paarweise gestuft auf unterschiedliche Höhenniveaus plastisch verformt sein, wobei abnehmende absolute Zahnhöhe mit zunehmender Schränkweite kombiniert ist. Es ist aber auch möglich, die Rohzähne bereits mit unterschiedlichen Rohspanwinkeln zu fräsen, und zwar unter Einhaltung gleicher oder ungleicher Keilwinkel zwischen Spanwinkel und Freiwinkel.

Das Sägeblatt kann zwischen der Zahnhöhe des Führungszahns und der Zahnhöhe eines Folgezahns eine Höhendifferenz im Bereich von etwa 0,05 bis 0,30 mm - insbesondere zwischen 0,08 und 0,15 mm - aufweisen. Diese Höhendifferenz kann beim Profilieren der Rohzähne ganz oder teilweise vorgebildet werden. Die endgültige Höhendifferenz ergibt sich jedoch nach der plastischen verformung der Zahnspitzen bzw. nach dem Schränken der Folgezähne. Unter der Zahnhöhe der geschränkten Folgezähne kann die mittlere Zahnhöhe oder die maximale Zahnhöhe, also die Zahnhöhe der inneren Ecke des geschränkten Folgezahns verstanden werden. Die Höhendifferenz sollte nicht allzu groß gewählt werden, um den von dem Führungszahn ausgeräumten Span nicht allzu dick zu machen. Wenn Folgezähne paarweise auf unterschiedliche Höhenniveaus bzw. in unterschiedliche Ebenen unterschiedlich plastisch verformt werden, darf die maximale Verformung der beiden kleinsten Folgezähne das plastische Verformungsvermögen der Zähne nicht überschreiten.

Der Führungszahn kann einen Phasenwinkel im Bereich zwischen 30° und 60° aufweisen. Die Ausbildung und Anordnung der Phase kann so getroffen sein, daß nur etwa die äußere Hälfte jedes geschränkten Folgezahns und/oder die innere Hälfte der durch die Phase gebildeten Schnittkante des Führungszahns arbeitet. Dies gilt für die beiden sich einem Führungszahn unmittelbar anschließenden Folgezähne in der Gruppe.

In allen Ausführungsformen kann der Phasenwinkel des Führungszahns und die Schränkweite der Folgezähne so aufeinander abgestimmt sein, daß die Belastung des Sägeblattes in etwa gleichmäßig auf die Zähne verteilt ist.

Das Verfahren zur Herstellung eines Sägeblattes zur Herstellung eines Sägeblattes mit einer sich wiederholenden Gruppe von Zähnen, die aus einem ungeschränkten gephasten Führungszahn mit einem in der Mitte seiner Zahnspitze gerade verlaufenden Schnittkantenabschnitt und einer vorzugsweise geraden Anzahl geschränkter Folgezähne besteht, wobei der Führungszahn eine größere Zahnhöhe als jeder der Folgezähne aufweist, kennzeichnet sich erfindungsgemäß dadurch, daß zunächst die Zähne als Rohzähne profiliert werden, daß dann die Zahnspitzen zumindest der Folgezähne durch Materialverlagerung in Bandlaufrichtung so unterschiedlich plastisch verformt werden, daß jeder Folgezahn durch die unterschiedliche plastische Verformung einerseits je einen vergrößerten positiven Spanwinkel und andererseits jeweils die gegenüber dem Führungszahn verringerte Zahnhöhe aufweist, und so ein Führungszahn und mehrere Folgezähne in der Gruppe gebildet werden, und daß der Führungszahn in der Gruppe durch Schleifen gephast und die Folgezähne geschränkt werden.

Im Ablauf der Herstellung wird zunächst das Rohband aus Bimetall in an sich bekannter Weise so profiliert, z.B. gefräst, daß die Rohzähne entstehen. Das Rohband wird abschnittweise profiliert, so daß pro Abschnitt mehrere Rohzähne gleichzeitig entstehen. Die Anzahl der Rohzähne kann zweckmäßig mit der Anzahl der Zähne in der Gruppe übereinstimmen. Besonders einfach ist es, wenn sämtliche Rohzähne mit gleicher Gestalt und gleicher Zahnhöhe profiliert werden und sich nur die herstellungsbedingten Toleranzen auswirken, die allerdings bewußt zugelassen werden, ja sogar erwünscht sind. Es folgt dann die unterschiedliche plastische Verformung der Zahnspitzen der Zähne, wobei aus den Rohzähnen Führungszähne und Folgezähne werden. Auch dabei können und sollen sich herstellungsbedingten Toleranzen auswirken, die bewußt zugelassen werden, ja sogar erwünscht sind. Der Führungszahn und die Folgezähne in der Gruppe bekommen so relativ große, unterschiedliche positive Spanwinkel und unterschiedliche Zahnhöhen, wobei die Zahnhöhen der Folgezähne in etwa übereinstimmen oder jedenfalls relativ nahe beieinanderliegen, so daß sich die Höhendifferenz zu der Zahnhöhe des Führungszahns ergibt. Diese Gestaltung wirkt sich auf das Schwingungsverhalten des Sägeblattes im Einsatz positiv aus. Die Folgezähne werden geschränkt, wobei das Schränken paarweise erfolgt. Auch mehrere Paare von Folgezähnen können gemeinsam, d.h. gleichzeitig, geschränkt werden, mit paarweise gleicher oder unterschiedlicher Schränkweite. Eine mögliche oder erforderliche Wärmebehandlung kann sich anschließen. Schließlich wird der Führungszahn pro Gruppe durch Schleifen gephast.

Vorteilhaft können sämtliche Zähne als Rohzähne mit insbesondere hinsichtlich der Rohzahnhöhe und des Rohspanwinkels übereinstimmender Gestalt profiliert werden, wobei dann die die Folgezähne bildenden Rohzähne in der Gruppe im Vergleich zum Führungszahn stärker plastisch verformt werden.

Andererseits ist es auch möglich, daß die Zähne als Rohzähne mit insbesondere hinsichtlich der Rohzahnhöhe aber auch z.B. des Spanwinkels unterschiedlicher Gestalt profiliert und so der Führungszahn und die Folgezähne vorgebildet werden. Es werden dann die Zahnspitzen des so vorgebildeten Führungszahns und der Folgezähne in der Gruppe so unterschiedlich plastisch verformt, daß der Führungszahn und jeder Folgezahn in der Gruppe durch die plastische Verformung einerseits einen vergrößerten positiven Spanwinkel und andererseits jeder Folgezahn eine gegenüber dem Führungszahn verringerte Zahnhöhe aufweist.

Die geschränkten Folgezähne werden nach ihrer Profilierung, insbesondere paarweise, auf gestuft angeordnete unterschiedliche Höhenniveaus unterschiedlich plastisch herabgeformt, wobei die Stufen abnehmender Höhendifferenzen mit Stufen zunehmender Spanwinkel und zunehmender Schränkweitendifferenzen kombiniert werden, und zwar bei Anordnung der Zähne in beliebiger Reihenfolge in der Gruppe. Die Höhendifferenzen von Stufe zu Stufe können etwa im Bereich 0,05 mm liegen. Die Spanwinkeldifferenzen können etwa 2° betragen.

Bei allen Herstellungsverfahren ist es vorteilhaft, wenn die Zahnspitzen des Führungszahns und der Folgezähne mindestens einer Gruppe gemeinsam, d.h. mehr oder weniger gleichzeitig, plastisch verformt werden, wobei sich die Verformungshübe an den Rohzähnen zumindest teilweise überlagern. Unabhängig davon können konstante oder variable Teilungen verwirklicht werden.

Die Erfindung wird anhand bevorzugter Ausführungsbeispiele weiter beschrieben und erläutert. Es zeigen:
- Fig. 1a: eine Projektionsansicht einer Gruppe von Zähnen des Sägeblattes in einer ersten Ausführungsform in Bandlaufrichtung,
- Fig. 1b: eine Projektionsansicht einer Gruppe von Zähnen des Sägeblattes in einer zweiten Ausführungsform in Bandlaufrichtung,
- Fig. 2: eine Seitenansicht eines durch Fräsen profilierten Rohbandes mit Rohzähnen,
- Fig. 3: eine Seitenansicht eines Stauchwerkzeuges in Zuordnung zu den Rohzähnen des Sägebandes gemäß Fig. 2,
- Fig. 4: eine Seitenansicht des Sägeblattes gemäß Fig. 2 nach der plastischen Verformung der Rohzähne,
- Fig. 5: einen Zahn des Sägeblattes in vergrößerter Darstellung,
- Fig. 6: eine weitere Ausführungsform des Sägeblattes,
- Fig. 7: eine Seitenansicht einer Ausführungsform mit Zähnen auf unterschiedlichen Höhenniveaus,
- Fig. 8: die Draufsicht auf das Sägeblatt gemäß Fig. 7,
- Fig. 9: die Projektion des Sägeblattes gemäß Fig. 7 und 8,
- Fig. 10: eine Seitenansicht einer weiteren Ausführungsform mit Zähnen auf unterschiedlichen Höhenniveaus,
- Fig. 11: die Draufsicht auf das Sägeblatt gemäß Fig. 10,
- Fig. 12: die Projektion des Sägeblattes gemäß Fig. 10 und 11,
- Fig. 13: eine Seitenansicht einer weiteren Ausführungsform mit Zähnen auf unterschiedlichen Höhenniveaus,
- Fig. 14: die Draufsicht auf das Sägeblatt gemäß Fig. 13,
- Fig. 15: die Projektion des Sägeblattes gemäß Fig. 13 und 14,
- Fig. 16: eine Seitenansicht einer weiteren Ausführungsform mit Zähnen auf unterschiedlichen Höhenniveaus,
- Fig. 17: die Draufsicht auf das Sägeblatt gemäß Fig. 16, und
- Fig. 18: die Projektion des Sägeblattes gemäß Fig. 16 und 17.

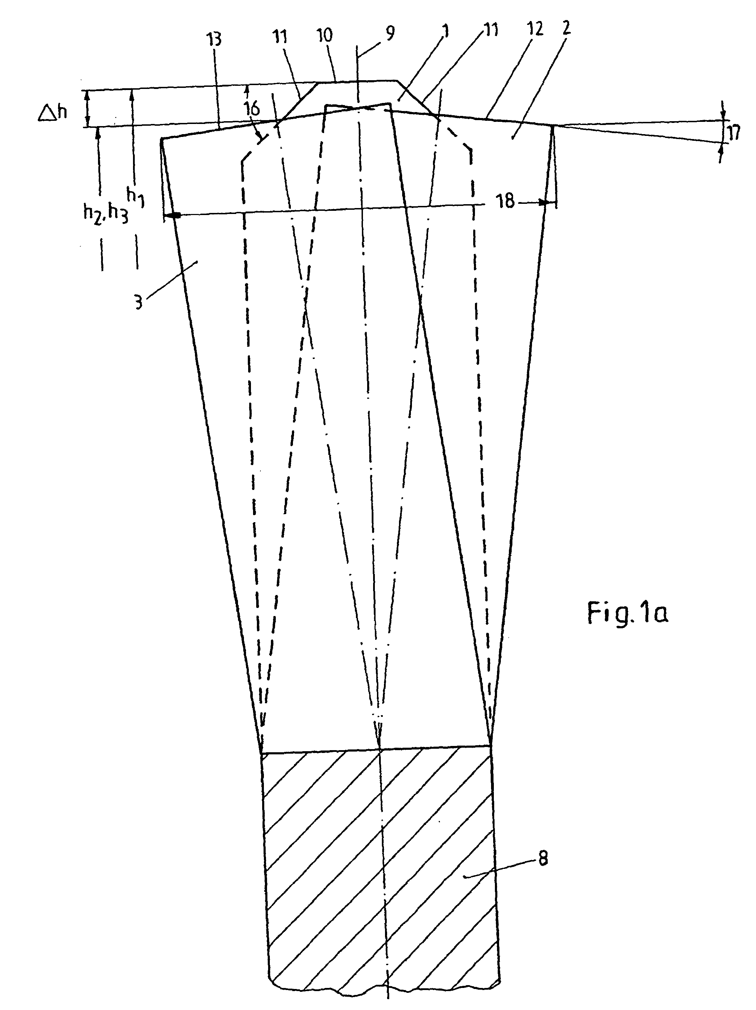

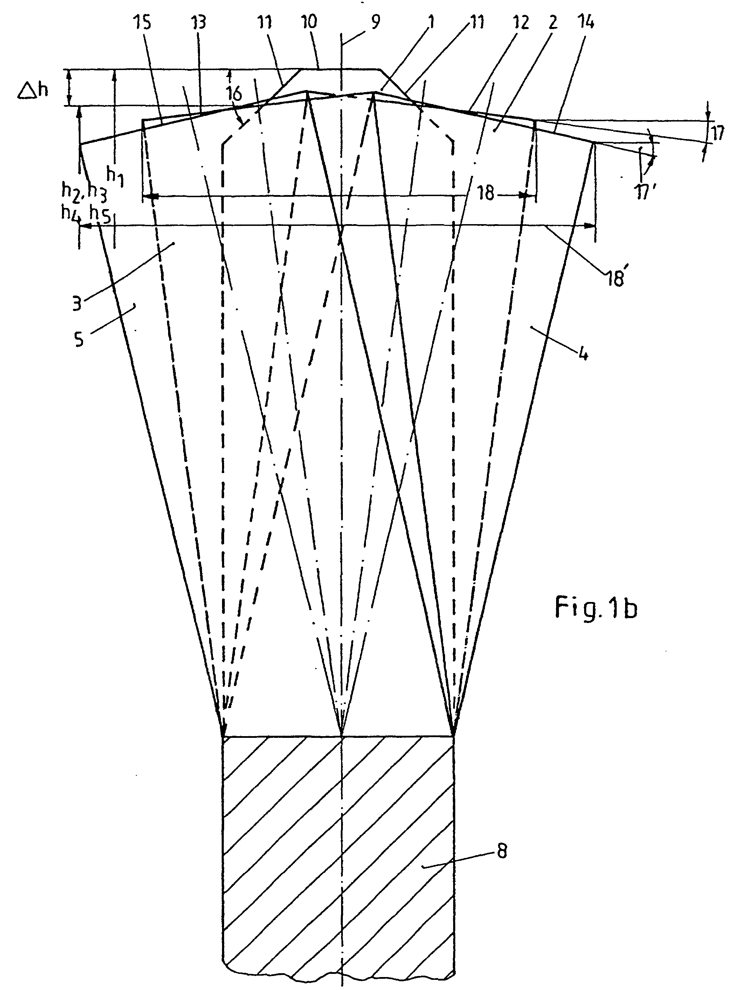

Fig. 1a und 1b verdeutlichen die grundsätzliche Anordnung und Ausbildung der Zähne an dem Sägeblatt. Es ist ein Führungszahn 1 und mehrere Folgezähne 2, 3, 4, 5, .. vorgesehen. Der Führungszahn 1 und die Folgezähne 2, 3, .. sind in einer sich wiederholenden Gruppe 6 angeordnet. Jede Gruppe 6 stellt eine Folge von Zähnen dar, bei der die Zähne unmittelbar aufeinander folgen. Auch die Gruppen 6 schließen jeweils aneinander an. Die Folgezähne 2, 3, .. sind jeweils in gerader Anzahl vorgesehen, wobei sie paarweise einander zugeordnet sind. Der Führungszahn 1 ist immer ein gerader ungeschränkter Zahn. Die Folgezähne 2, 3, 4, 5, .. sind immer geschränkte Zähne, wobei die Schränkung in der Zahnfolge abwechselnd nach rechts und links bzw. umgekehrt durchgeführt ist. Der Führungszahn 1 besitzt immer eine größere Zahnhöhe als die Folgezähne 2, 3, ...

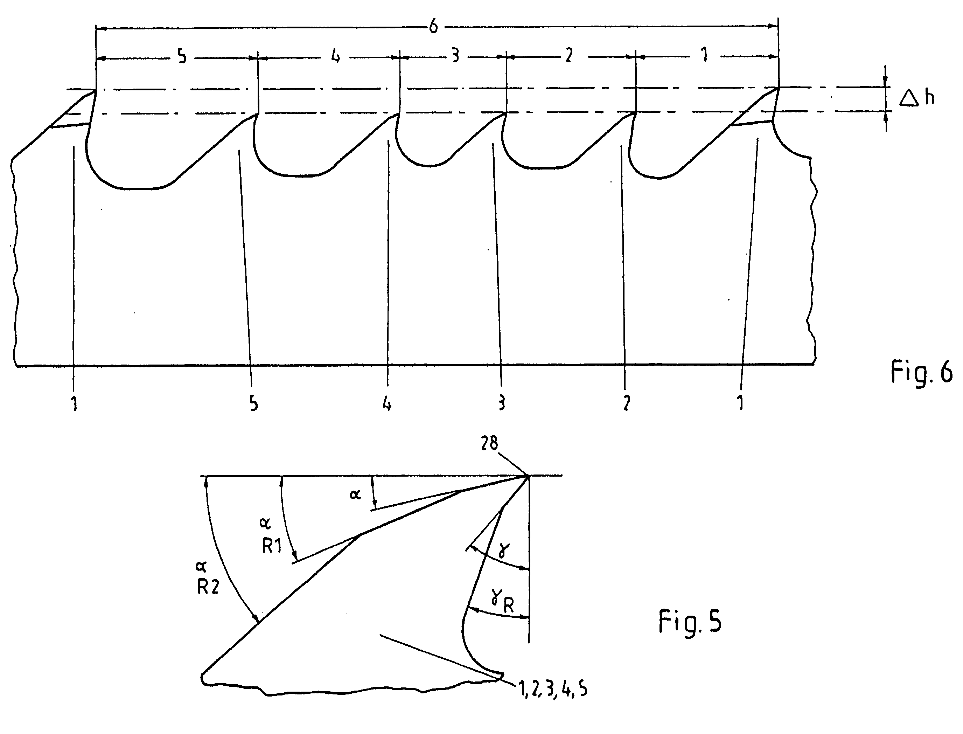

In den Fig. 1a und 2 bis 4 ist die einfachste Ausführungsform mit der kleinsten Gruppe 6 von Zähnen dargestellt. Die Gruppe 6 besitzt einen Führungszahn 1 und zwei Folgezähne 2 und 3. Fig. 1b und 6 verdeutlichen eine Gruppe 6, die aus einem Führungszahn 1 und vier Folgezähnen 2, 3, 4 und 5 besteht. Bei der nächsten Ausführungsform, die nicht dargestellt ist, wäre in der Gruppe 6 ein Führungszahn 1 und sechs Folgezähne 2, 3, .. angeordnet.

Bei dem jeweils einzigen Führungszahn 1 in einer Gruppe 6 handelt es sich um einen geraden Zahn, dessen Zahnbreite der Breite des Rohbandes 7 bzw. des Grundkörpers 8 des Sägeblattes entspricht. Symmetrisch zu einer Längsmittelebene 9 weist der Führungszahn 1 an seiner Zahnspitze einen gerade bzw. senkrecht zu der Längsmittelebene 9 verlaufenden Abschnitt 10 seiner Schnittkante auf, die, wie Fig. 1a und 1b erkennen lassen, über ihre gesamte Erstreckung wirksam ist, d. h. Schnittarbeit verrichtet. In symmetrischer Ausbildung schließt sich an diesen geraden Abschnitt 10 nach rechts und links je ein geneigter Abschnitt 11 an, der auch als Phase bezeichnet wird. Der Abschnitt 11 erstreckt sich bis unter die Schnittkanten 12, 13, 14, 15 der Folgezähne 2, 3, 4, 5. Hieraus wird verständlich, daß am fertigen Sägeblatt nur der innere Teil der Abschnitte 11 an jedem Führungszahn und nur der jeweils äußere Teil der Schnittkanten 12-15 an jedem Folgezahn 2-5 Schneidarbeit verrichten. Der Führungszahn 1 besitzt eine Höhe h₁. Die Folgezähne 2 und 3 besitzen Zahnhöhen h₂ bzw. h₃. Die Zahnhöhen h₂ und h₃ können geringfügig unterschiedlich sein. Sie liegen relativ nahe beieinander. Die Zahnhöhe h₁ des Führungszahns 1 ist dagegen größer, so daß sich zwischen den Zahnhöhen eine Höhendifferenz 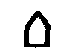 h ergibt. Die geneigten Abschnitte 11 der Schnittkante an dem Führungszahn 1 sind in einem Phasenwinkel 16 angeordnet, der Werte zwischen 30° und 60° einnehmen kann. Die Schränkung der Folgezähne 2, 3, .. ist in einem Schränkwinkel 17 entsprechend der Schränkweite 18 durchgeführt. Die Schränkung der Folgezähne 2, 3, .. wird in der Regel paarweise durchgeführt. Bei jedem nachfolgenden Paar Folgezähne kann die Schränkung entsprechend der gewünschten Aufweitung des Schnittkanals größer werden, aber auch gleich bleiben, wenn ein Arbeiten in die Tiefe des Schnittkanals bei entsprechendem Vorschub betont werden soll. Die Schränkung kann sogar kleiner werden. Es ist auch möglich, die Schränkung von paarweisen Folgezähnen unterschiedlich zu gestalten. Die Höhendifferenz 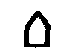 h und der Phasenwinkel 16 sowie die Anordnung des Abschnittes 11 relativ zur Längsmittelebene 9 sind so aufeinander abgestimmt, daß die inneren Ecken der Folgezähne 2, 3, .. in der in Fig. 1 dargestellten Projektion von der Gestalt des Führungszahns 1 abgedeckt sind, also keine Schnittarbeit verrichten, so daß nur die äußeren Ecken der Folgezähne 2, 3, .. arbeiten. Bei dem Führungszahn 1 ist dies, wie ersichtlich, umgekehrt.

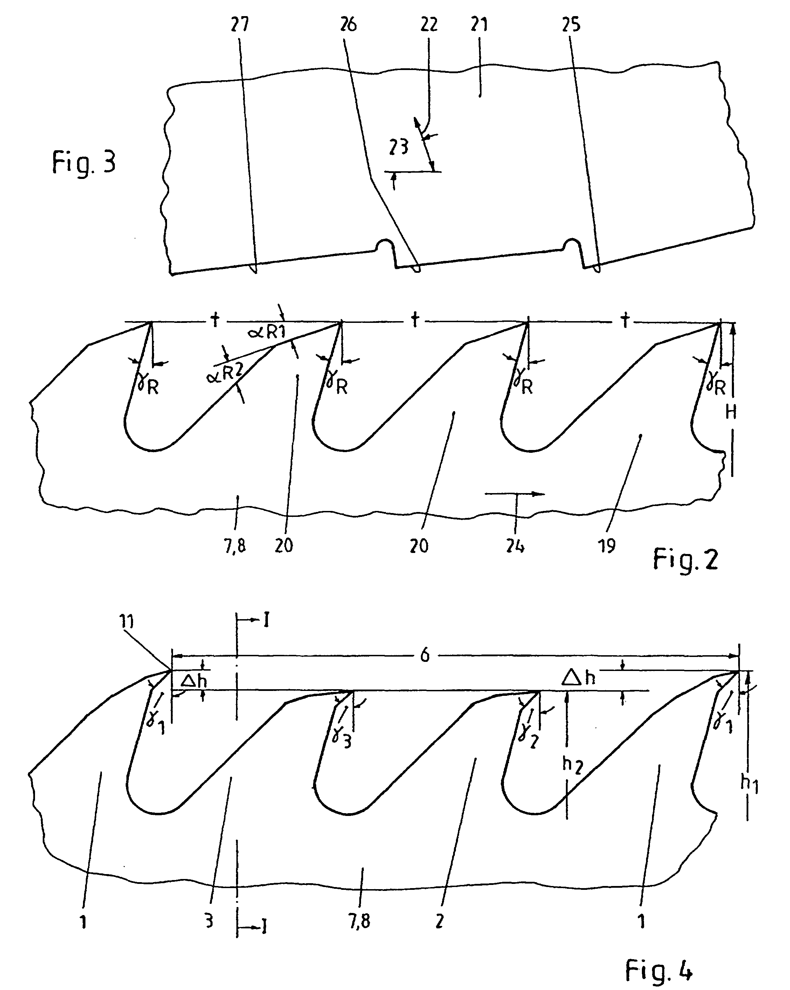

Wesentlich für die Herstellung eines solchen Sägeblattes ist es, daß an einem Rohband 7 zunächst Rohzähne 19 und 20 (Fig. 2) erzeugt werden, z.B. durch einen Fräsvorgang. Die Rohzähne 19 und 20 können sämtlich gleiche Gestalt und gleiche Rohzahnhöhe H aufweisen, wie dies in Fig. 2 dargestellt ist. Die Rohzähne 19 und 20 können mit konstanter Teilung t angeordnet sein. Es ist aber auch vorstellbar, daß die Rohzähne 19 bereits so ausgebildet sind, daß sie eine Zuordnung zu dem Führungszahn 1 besitzen, also im Verlauf der Herstellung die Rohzähne 19 in die Führungszähne 1 umgeformt werden sollen, während die Rohzähne 20 zu Folgezähnen 2, 3, .. umgeformt werden. Die Rohzähne 20 können dabei insbesondere gegenüber den Rohzähnen 19 auch eine unterschiedliche Zahnhöhe aufweisen. Fig. 2 zeigt jedoch übereinstimmende Rohzähne 19 und 20, die in konstanter Teilung t angeordnet sind und die in besonders einfacher Weise durch einen Fräsvorgang erzeugt werden. Die Rohzähne 19 und 20 sind mit einem übereinstimmenden positiven Rohspanwinkel gamma_{R} profiliert und besitzen auch übereinstimmend einen ersten Rohfreiwinkel α_{R1} und einen zweiten Rohfreiwinkel α_{R2}. Die Verwirklichung dieser beiden unterschiedlichen Rohfreiwinkel ist nicht unbedingt erforderlich. Es genügt auch, nur einen einzigen Rohfreiwinkel durch das Profilieren zu erzeugen.

Sämtliche profilierten Rohzähne 19 und 20 werden in unterschiedlicher Weise plastisch verformt, wobei die plastische Verformung der Rohzähne 19, 20 insbesondere gemeinsam pro Gruppe 6, d. h. im wesentlichen gleichzeitig erfolgt. Dies wird aus einer Zusammenschau der Fig. 2 und 3 erkennbar. In Fig. 3 ist ein Stauchstempel 21 verdeutlicht, der sich mit seiner Länge über die Länge einer Gruppe 6 von Zähnen erstreckt und gemäß Doppelpfeil 22 hubartig angetrieben wird. Die Bewegungsrichtung gemäß Doppelpfeil 22 erfolgt in einem spitzen Stauchwinkel 23 zu der Bandlaufrichtung 24 des Sägeblattes. Der Stauchstempel 21 besitzt eine erste Arbeitsfläche 25, deren Anordnung und Ausbildung für die plastische Verformung der Zahnspitze des Rohzahns 19 zur Erzeugung der Schnittkante und des Spanwinkels gamma₁ sowie des Freiwinkels α₁ des Führungszahns 1 zugeordnet ist, und zwar so, daß die Zahnspitze des Führungszahns 1 mit seinem Abschnitt 11 auch gleichzeitig die Zahnhöhe h₁ erhält. Der Stauchstempel 21 weist eine zweite Arbeitsfläche 26 auf, die für die plastische Verformung der Zahnspitze des Rohzahns 20 zwecks Erzeugung des Folgezahns 2 ausgebildet und angeordnet ist. Mit der Arbeitsfläche 26 wird die Zahnspitze bzw. die Schnittkante 12 des Folgezahns 2 durch plastische Verformung hergestellt, wobei sich aus dem Rohspanwinkel gamma_{R} entsprechend der Ausdehnung des plastisch verformten Bereiches an der Zahnspitze der Spanwinkel gamma₂ an dem Folgezahn 2 ergibt. Außerdem wird dabei die Zahnspitze so verformt, daß der Folgezahn 2 die Zahnhöhe h₂ erhält, also die Zahndifferenz 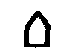 h zu der Zahnhöhe h₁ des Führungszahns 1 erzeugt wird. Es ist leicht vorstellbar, daß der den Folgezahn 2 bildende Rohzahn 20 gemäß Fig. 2 auch bereits eine geringere Zahnhöhe als der Rohzahn 19 nach dem Profilieren aufweisen könnte, so daß die Zahndifferenz 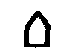 h teilweise aus dem Profilieren, teilweise aus der plastischen Verformung resultiert.

Der Stauchstempel 21 weist schließlich in der einfachsten Ausführungsform noch eine dritte Arbeitsfläche 27 auf, die der plastischen Verformung des zweiten Rohzahns 20 (Fig. 2) und damit der Erzeugung des Folgezahns 3 zugeordnet ist. Mit dieser plastischen verformung erhält der Folgezahn 3 eine Zahnhöhe h₃ sowie einen Spanwinkel gamma₃. Es ist erkennbar, daß die Folgezähne 2 und 3 untereinander nicht exakt gleich ausgebildet sind, sondern daß sich herstellungsbedingt bereits während des Profiliervorgangs (Fig. 2), aber vor allen Dingen auch während des Stauchvorgangs (Fig. 3) toleranzmäßige Unterschiede ergeben, die sich in geringfügigen oder bewußt größer zugelassenen Differenzen insbesondere in den Höhen h₂ und h₃ und den Spanwinkeln gamma₂ und gamma₃ ergeben. Aus Fig. 3 ist auch erkennbar, daß die erste Arbeitsfläche 25 gegenüber den beiden anderen Arbeitsflächen 26 und 27 vergleichsweise zurückversetzt angeordnet ist, so daß bei einem Stauchvorgang zunächst die Arbeitsflächen 26 und 27 mit den Zahnspitzen der Rohzähne 20 in Kontakt kommen, während dieser Kontakt zwischen der Arbeitsfläche 25 und der Zahnspitze des Rohzahns 19 erst nach einem gewissen Freihub einsetzt. Trotzdem wird unter einer derart durchgeführten plastischen Verformung eine gemeinsame plastische Verformung der Rohzähne 19, 20 in der Zahngruppe 6 verstanden, die also mehr oder weniger zeitgleich abläuft. Es ist andererseits denkbar, den Stauchstempel 21 zu unterteilen und die Hübe der einzelnen Teile entsprechend zu steuern bzw. aufeinander abzustimmen. Die unterschiedliche plastische Verformung der Zahnspitzen der Rohzähne 19 und 20 kann beispielsweise durch Stauchen, aber auch durch Rollen erfolgen, wobei dann die Umformung mehr oder weniger nacheinander erfolgt. Es ist auch vorstellbar, daß der Stauchstempel 21 eine größere Arbeitslänge aufweist, so daß er beispielsweise die Rohzähne von zwei aufeinanderfolgenden Gruppen 6 gleichzeitig plastisch verformen kann. Die unterschiedliche plastische Verformung der Zahnspitzen der Rohzähne 19 und 20 ist wesentlich. Neben der Höhendifferenz ergibt sich eine Vergrößerung des positiven Rohspanwinkels, wobei Spanwinkel an dem Führungszahn 1 und den Folgezähnen 2, 3, .. erzeugt werden können, die allein durch Fräsen nicht herstellbar sind. Bei der plastischen Verformung wird auch der nach dem Profilieren vorhandene Grat an jeder Zahnspitze in Richtung auf die Bandlaufrichtung 24 umgelegt, wodurch die Schärfe jedes Zahns erhöht wird. Da aber dennoch die Spanwinkel an den Zahnspitzen des Führungszahns 1 und der Folgezähne 2, 3, .. unterschiedlich sind, wirkt sich dies positiv in einer Reduzierung des Schwingungsverhaltens des Sägebandes aus, derart, daß eine unterschiedliche Spanschuppenfrequenz entsteht, die nicht nur zur Laufruhe des Sägebandes während des Einsatzes beiträgt, sondern auch für die Schnitthaltigkeit und Lebensdauer des Sägeblattes günstig ist.

Nach der plastischen Verformung der Zahnspitzen, bei der die Höhendifferenz 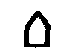 h herbeigeführt bzw. fertiggestellt wurde, wird der Führungszahn 1 in der Gruppe 6 gephast und die Folgezähne 2, 3, .. geschränkt.

Fig. 5 zeigt in vergrößernder Darstellung einen Führungszahn 1 oder einen Folgezahn 2, 3, .., der mit einem Rohspanwinkel gamma_{R} und zwei Freiwinkeln α_{R1} und α_{R2} gefräst und anschließend derart plastisch verformt wurde, daß im Bereich seiner Zahnspitze 28 ein positiver Spanwinkel gamma und ein Freiwinkel α erzeugt wurde, wobei der Keilwinkel der Zahnspitze 28 im wesentlichen beibehalten wurde.

Fig. 6 zeigt eine Seitenansicht einer zweiten Ausführungsform des Sägeblattes, ähnlich der Ansicht gemäß Fig. 4. Einem Führungszahn 1 sind hier vier Folgezähne 2, 3, 4, 5 in der Gruppe 6 zugeordnet. Zusätzlich findet eine variable Teilung t₁, t₂, t₃, t₄ und t₅ Anwendung. Auch hier sind die Zähne unterschiedlich plastisch verformt. Zwischen den Folgezähnen 2, 3, 4, 5 ergeben sich geringfügige Höhenunterschiede, während die Höhendifferenz 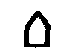 h zum Führungszahn 1 in anderer Größenordnung liegt.

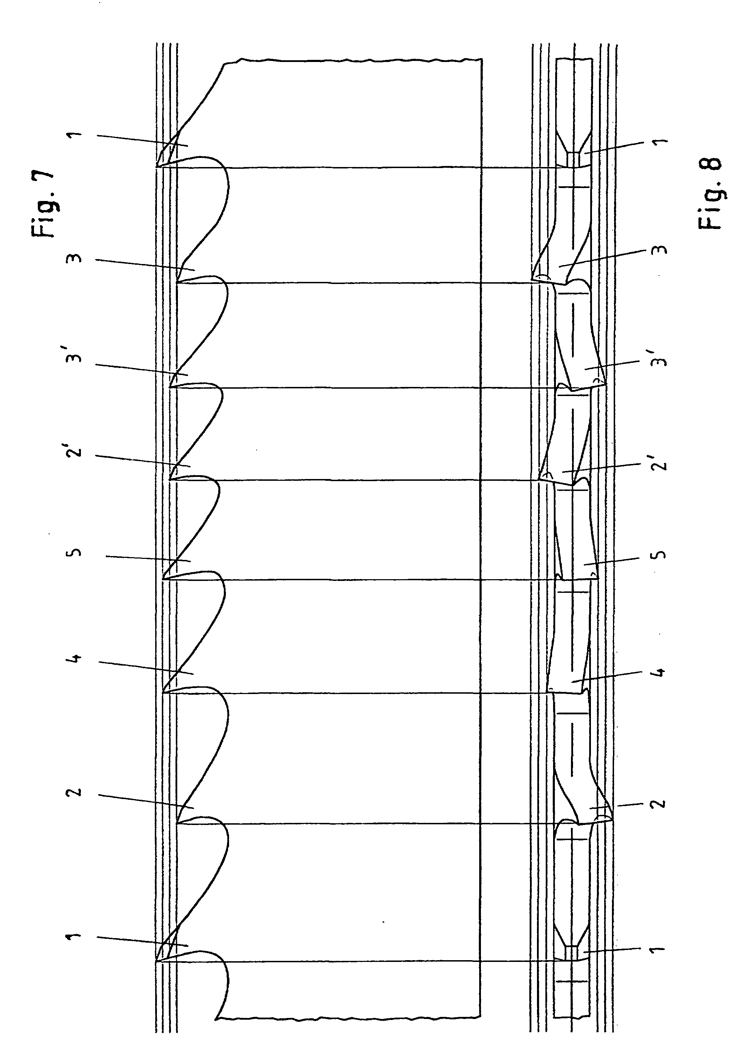

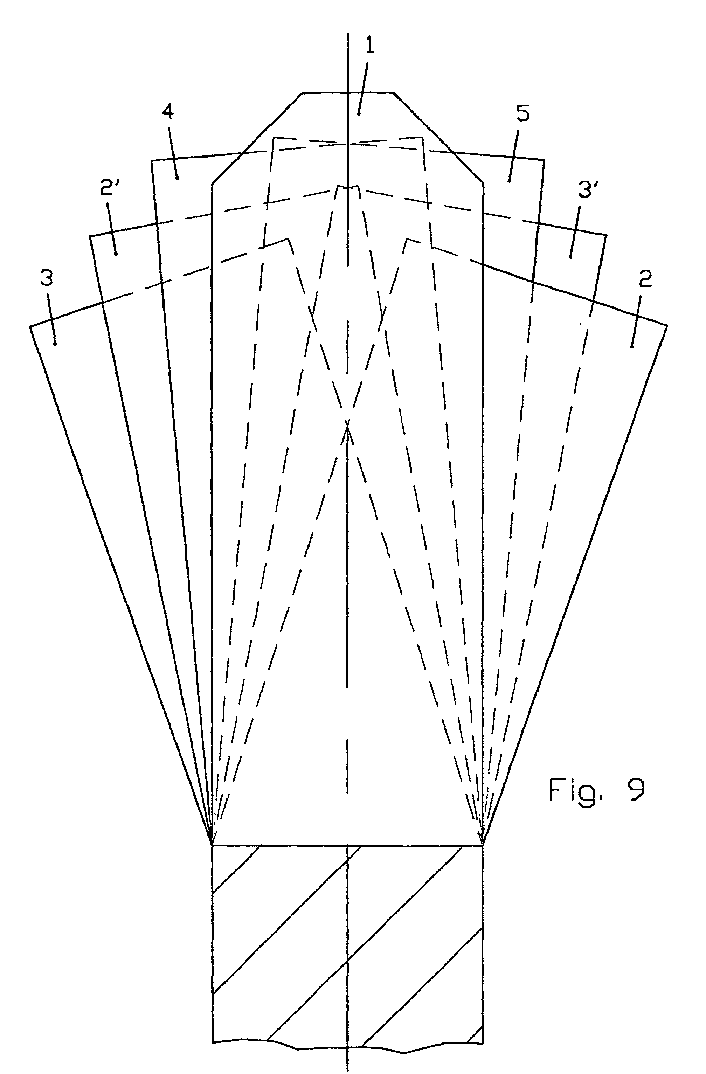

Das Ausführungsbeispiel des Sägeblattes gemäß den Fig. 7 bis 9 weist eine Gruppe 6 von sieben Zähnen auf. Jede Gruppe 6 besitzt einen Führungszahn 1 und drei Paare von Folgezähnen 2, 3; 4, 5 und 2', 3'. In den Fig. 7 und 8 sind Hilfslinien eingezeichnet. Die Hilfslinien in Fig. 7 verdeutlichen die unterschiedlichen zahnhöhen bzw. Höhenniveaus. Die Hilfslinien in Fig. 8 verdeutlichen die unterschiedlichen Schränkweiten als Übermaß zur Bandbreite. Man erkennt, daß das Paar von Folgezähnen 2, 3 die geringste Zahnhöhe und die größte Schränkweite aufweist. Dies wird auch anhand der Projektion gemäß Fig. 9 deutlich. Es ist auch erkennbar, daß die zueinander gehörenden Folgezähne 2 und 3 nicht unmittelbar aufeinander folgend angeordnet sind, sondern beliebig in der Gruppe verteilt. Bei dem Paar Folgezähne 4 und 5 handelt es sich um diejenigen, die unter den Folgezähnen die größte Höhe aufweisen. Dementsprechend besitzen sie die geringste Schränkweite. Die Höhe der Folgezähne 4 und 5 ist nicht exakt gleich, bildet jedoch eine Höhendifferenz 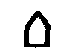 h zu der Höhe der Führungszähne 1. Die Folgezähne 4 und 5 sind auf einem ersten Höhenniveau gegenüber den Führungszähnen 1 angeordnet. Es gibt in der Gruppe 6 noch zwei weitere zueinander gehörige Folgezähne 2' und 3', deren Höhenniveau zwischen den Paaren von Folgezähnen 2, 3 und 4, 5 angeordnet ist. Entsprechend ist die Schränkweite ausgebildet. Man erkennt, daß die Zähne auf unterschiedlich gestuften Höhenniveaus angeordnet sind, wobei der Stufungsschritt, also die Höhendifferenz von einem Höhenniveau zum benachbarten Höhenniveau insbesondere gleich über die gesamte Höhenstufung durchgeführt sein kann. Das gilt für die Schränkweitenstufung. Die Anordnung der Zähne in der Gruppe ist beliebig. Sinnvoll ist es, den Wechsel von einem rechts geschränkten Folgezahn zu einem links geschränkten Folgezahn usw. beizubehalten. Aber selbst diese Bedingung muß nicht erfüllt sein.

Fig. 9 läßt erkennen, daß es hinsichtlich der Ausräumung des Schnittkanals nur auf die Projektion der Zähne ankommt. Die Reihenfolge der Zähne in der Gruppe ist beliebig. Jeder Zahn arbeitet nur mit seinem Schnittkantenabschnitt, der seitlich über die Projektion der anderen Zähne hinausragt. Auf diese Weise werden aus dem Schnittkanal Späne in Streifenform ausgetragen, die in der Projektion seitlich nebeneinander liegen und einander nicht überlappen. Diese Streifen sind infolge der gleichmäßigen Stufung der Schränkweite gleich breit. Es ist auch erkennbar, wie die Belastung in etwa gleichmäßig auf sämtliche Zähne in der Gruppe verteilt ist.

Die Herstellung des Sägeblattes gemäß den Fig. 7 bis 9 kann in der Weise erfolgen, daß zunächst die Profilierung sämtlicher Rohzähne beispielsweise durch Fräsen mit einem Spanwinkel von 10° und einer übereinstimmenden Rohzahnhöhe erfolgt. Mit dieser Profilierung wird lediglich die variable Teilung vorgebildet. Anschließend erfolgt die plastische Verformung sämtlicher Zähne, die zweckmäßig in je einem gemeinsamen Verformungsschritt für sämtliche Zähne der Gruppe durchgeführt wird, wobei an den einzelnen Zähnen jedoch ganz unterschiedliche Verformungen entstehen. So wird der Führungszahn 1 beispielsweise mit einer Höhendifferenz von 0,15 mm gegenüber der Rohzahnhöhe herabgeformt und bekommt dadurch einen Spanwinkel im Bereich seiner Spitze von z. B. 15°. Die Spitze des Führungszahns 1 befindet sich damit auf einem ersten Höhenniveau. Das Paar Folgezähne 4, 5 wird im Vergleich zu dem Führungszahn stärker herabgeformt und landet auf einem Höhenniveau, welches sich von der Rohzahnhöhe um beispielsweise 0,20 mm unterscheidet. Die Folgezähne 4, 5 bekommen dabei einen Spanwinkel von beispielsweise 17° im Bereich ihrer Zahnspitzen. Die beim Profilieren entstandenen Toleranzen zwischen den Rohzähnen werden bewußt zugelassen bzw. ausgenutzt, derart, daß die Folgezähne 4, 5 nach der plastischen Verformung zwar nicht exakt auf dem gleichen Höhenniveau liegen und auch nicht exakt den gleichen Spanwinkel aufweisen. Auch hier werden Unterschiede, freilich in anderer Größenordnung, zwischen den an sich zueinander gehörigen Folgezähnen 4 und 5 zugelassen. Das weitere Paar Folgezähne 2', 3' wird beispielsweise von der Rohzahnhöhe auf ein weiteres Höhenniveau herabgeformt, welches um 0,25 mm tiefer liegt als die Rohzahnhöhe. Der angestrebte Spanwinkel beträgt hier beispielsweise 19°. Das Paar von Folgezähnen 2, 3, welches nach der plastischen Verformung auf dem niedrigsten Höhenniveau angeordnet ist, weist einen Höhenunterschied von beispielsweise 0, 30 mm zur Rohzahnhöhe auf. Der angestrebte Spanwinkel beträgt 21°. Man erkennt an diesem Beispiel, daß die Stufen zwischen den einzelnen Höhenniveaus gleich bemessen sind, nämlich 0,05 mm. Die Stufung der Spanwinkel beträgt im Unterschied 2°. Selbstverständlich können auch hier entsprechende Toleranzen zugelassen werden, beispielsweise von ± 1°. Nach der plastischen Verformung wird der Führungszahn 1 gephast, und die Folgezähne 2, 3, 4, 5, 2', 3' geschränkt.

Man erkennt, daß das Paar Folgezähne 2, 3 dasjenige ist, welches am meisten plastisch verformt wurde. Falls das Material des Bandes eine solche Verformung nicht mitmacht bzw. die Gefahr von Brüchen besteht, empfiehlt es sich, die Rohzahnhöhe dieser Zähne, die die Folgezähne 2, 3 bilden, beim Profilieren bereits geringer zu gestalten als die Rohzahnhöhe der übrigen Zähne, damit die relative Verformung an den Folgezähnen 2, 3 geringer wird. Entsprechendes kann auch für andere Paare von Folgezähnen in Betracht gezogen werden.

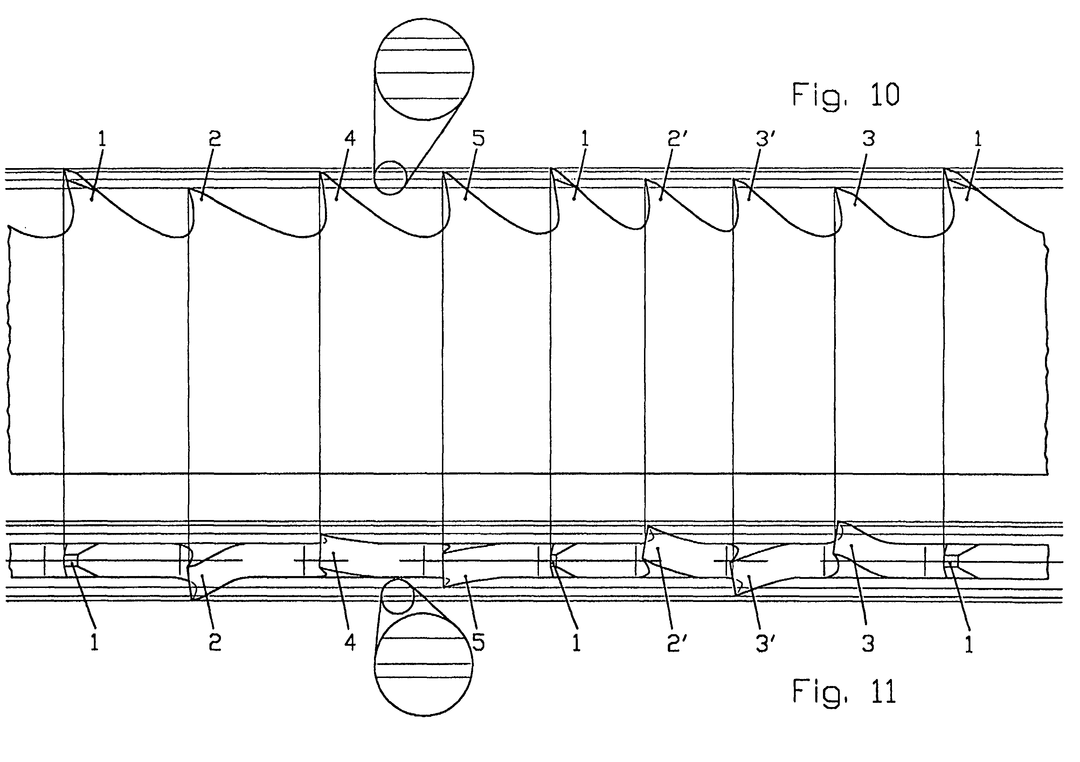

In den Fig. 10 bis 12 ist ein weiteres Ausführungsbeispiel eines Sägeblattes mit einer Gruppe von jedoch acht Zähnen dargestellt. Bei diesem Ausführungsbeispiel stimmt vieles mit dem Ausführungsbeispiel der Fig. 7 bis 9 überein, weshalb hierauf verwiesen werden kann. Die gerade Anzahl von Zähnen in der Gruppe ergibt sich jedoch dadurch, daß der Führungszahn 1 in Form eines weiteren Führungszahns 1 ein zweites Mal in der Gruppe auftaucht. Der weitere Führungszahn 1 kann etwa in der Mitte der Gruppe angeordnet sein. Die Zähne sind mit variabler Teilung angeordnet.

Fig. 10 zeigt, daß die Stufung der Höhe nicht in gleichen Schritten, sondern hier in unterschiedlichen Schritten durchgeführt ist. Die vergrößerungsdarstellung läßt die gegenseitige Relation erkennen. Zwischen den herabgeformten Führungszähnen 1 und den größten Folgezähnen 4, 5 besteht nur eine kleine Höhendifferenz. Die jeweitige Höhendifferenz zu den Folgezähnen 2', 3' ist schon größer und die letzte Höhendifferenz von den Folgezähnen 2', 3' zu den Folgezähnen 2, 3 ist noch größer. Es ist aber auch möglich, die Höhendifferenzen unterschiedlich und in anderer Reihefolge zu verwirklichen, beispielsweise fallend oder unregelmäßig.

Fig. 11 zeigt eine ungleichmäßige, fallende Stufung der Schränkweite, deren Verlauf in der Vergrößerungsdarstellung besser erkennbar ist. Die kleinste Stufe besteht zwischen den Folgezähnen 2', 3' und den Folgezähnen 2, 3, also außen am Band. Damit werden die Späne, die die Folgezähne 2, 3 aus dem Schnittkanal ausräumen, bewußt schmal gehalten. Dies verbessert die Güte der Oberfläche des geschnittenen Werkstücks. Die Stufung der Schränkweite kann aber auch steigend oder auch kombiniert steigend und fallend erfolgen.

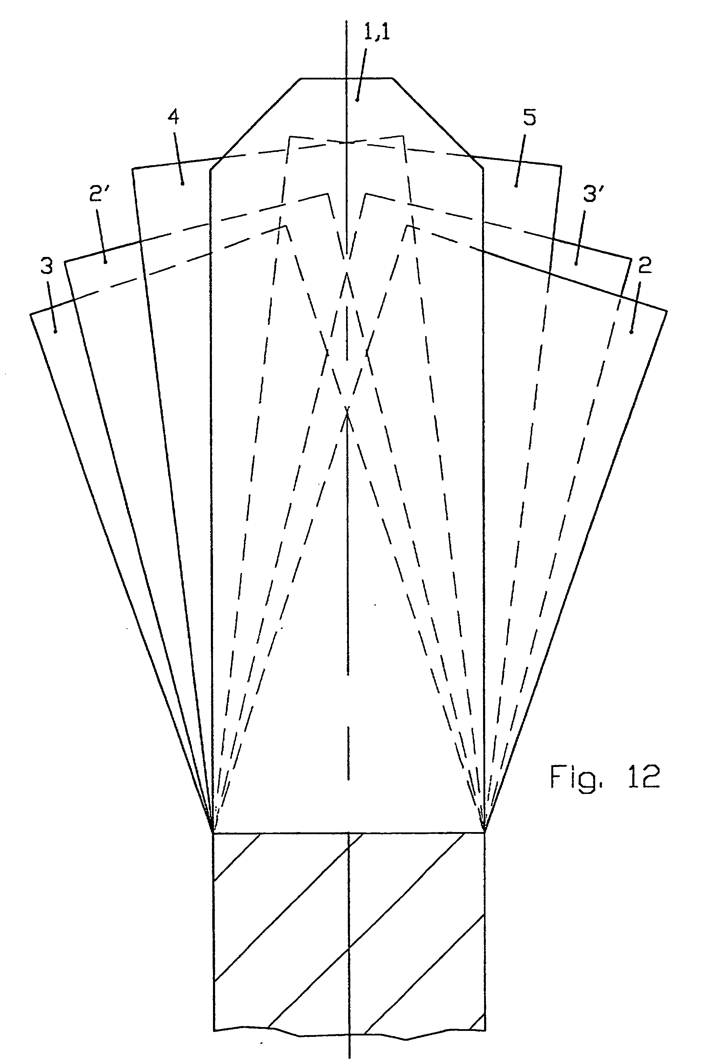

Die Projektionsdarstellung der Zähne gemäß Fig. 12 stimmt prizipiell mit der Projektionsdarstellung gemäß Fig. 9 überein. Die Führungszähne 1 sind identisch ausgebildet und überdecken sich. Die unterschiedliche Höhenstufung und die unterschiedliche Schränkweitenstufung sind auch hier erkennbar.

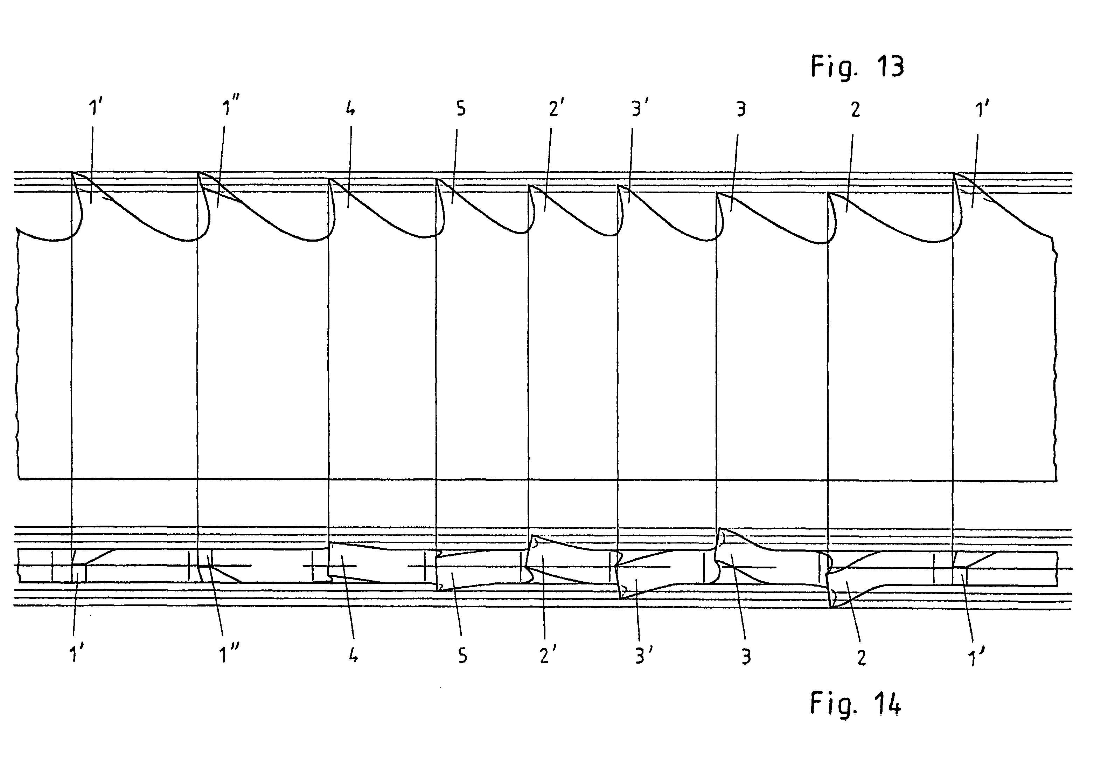

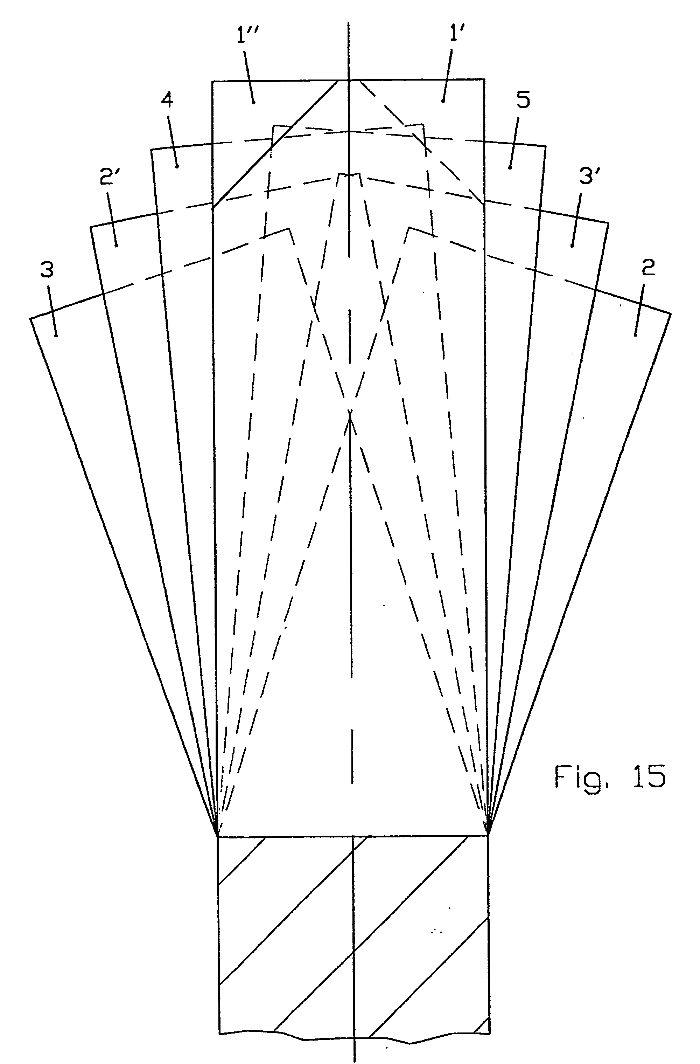

Bei dem Ausführungsbeispiel der Fig. 13 bis 15 besteht die Gruppe der Zähne ebenfalls aus acht Zähnen, jedoch sind hier zwei unterschiedliche Führungszähne 1' und 1" unmittelbar nacheinander am Beginn der Gruppe angeordnet. Man erkennt, daß der Führungszahn 1' nur nach der einen Seite und der Führungszahn 1" nur nach der anderen Seite gephast ist. Die Paare der Folgezähne sind gemäß ihrer Höhenstufung hintereinander angeordnet. Nach den Führungszähnen 1', 1" folgt das Paar Folgezähne 4, 5 mit der größten Höhe der Folgezähne. Es schließt sich dann das Paar Folgezähne 2', 3' und dann das Paar Folgezähne 3, 2 mit der niedrigsten Höhen an. Auch hier ist variable Teilung verwirklicht. Selbstverständlich könnte auch konstante Teilung verwirklicht sein. Auch hier ist an sich die Reihenfolge der Zähne in der Gruppe beliebig.

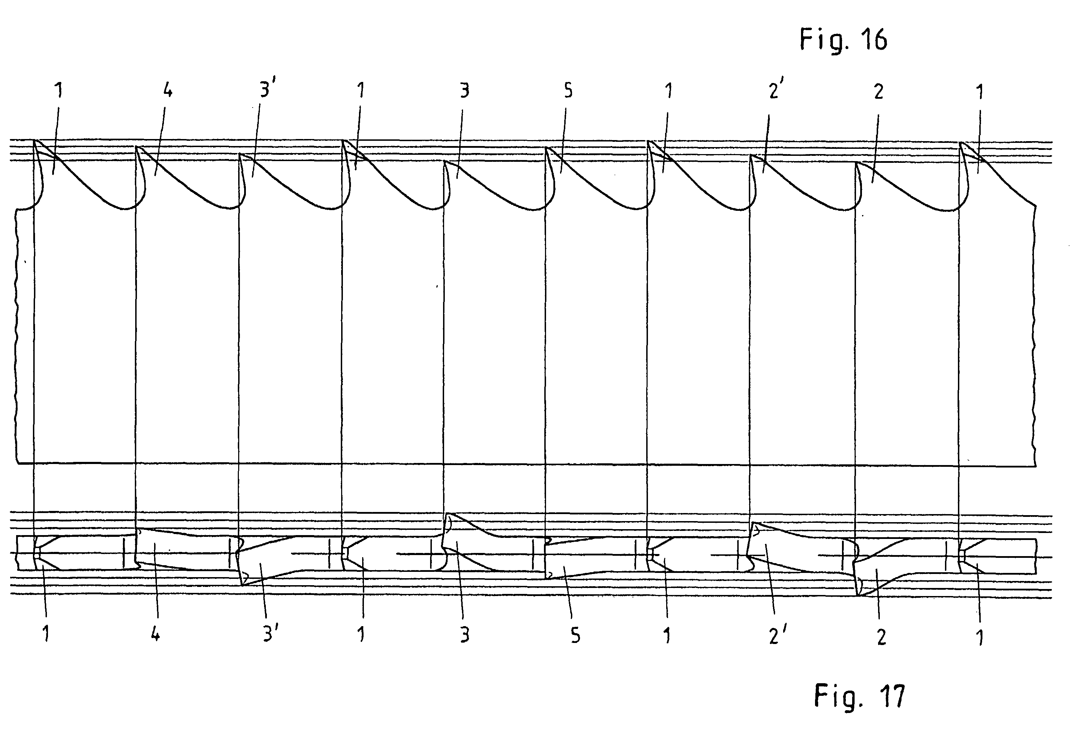

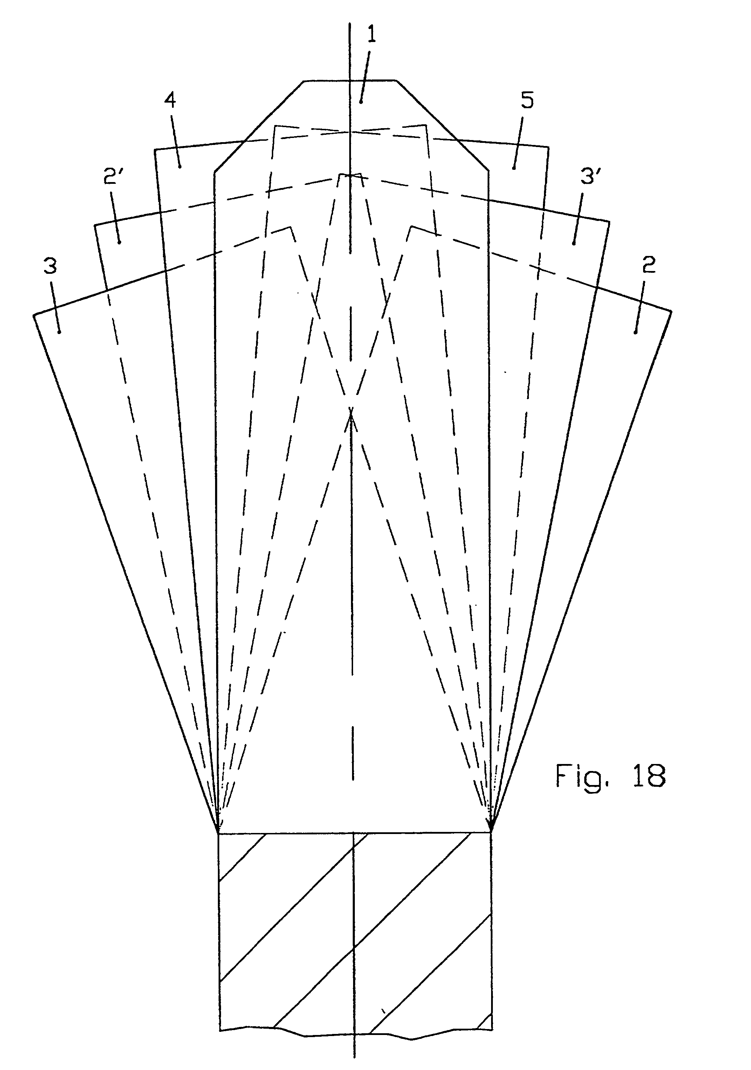

Das Ausführungsbeispiel des Sägeblattes gemäß den Fig. 16 bis 18 weist neun Zähne in der Gruppe auf. Der Führungszahn 1 ist dreimal in der Gruppe verteilt angeordnet. Von den Folgezähnen befinden sich jeweils zwei zwischen zwei Führungszähnen, wobei diese von zwei benachbarten Führungszähnen eingeschlossenen Folgezähne unterschiedlichen Paaren angehören. Aber auch hier stimmt die Projektion gemäß Fig. 18 mit der Projektionsdarstellung gemäß Fig. 9 zeichnerisch überein.

### BEZUGSZEICHENLISTE

- 1 -: Führungszahn
- 2 -: Folgezahn
- 3 -: Folgezahn
- 4 -: Folgezahn
- 5 -: Folgezahn
- 6 -: Gruppe
- 7 -: Rohband
- 8 -: Grundkörper
- 9 -: Längsmittelebene
- 10 -: Abschnitt

- 11 -: Abschnit
- 12 -: Schnittkante
- 13 -: Schnittkante
- 14 -: Schnittkante
- 15 -: Schnittkante
- 16 -: Phasenwinkel
- 17 -: Schränkwinkel
- 18 -: Schränkweite
- 19 -: Rohzahn
- 20 -: Rohzahn

- 21 -: Stauchstempel
- 22 -: Doppelpfeil
- 23 -: Stauchwinkel
- 24 -: Bandlaufrichtung
- 25 -: Arbeitsfläche
- 26 -: Arbeitsfläche
- 27 -: Arbeitsfläche
- 28 -: Zahnspitze

## Patentansprüche

1. Sägeblatt mit einer sich wiederholenden Gruppe (6) von Zähnen (1, 2, 3, ..), die aus einem ungeschränkten gephasten Führungszahn (1) mit einem im Vergleich zu seiner Breite kleineren, in der Mitte seiner Zahnspitze angeordneten wirksamen Schnittkantenabschnitt und einer vorzugsweise geraden Anzahl geschränkter Folgezähne (2, 3, ..) besteht, wobei der Führungszahn (1) eine größere Zahnhöhe als jeder der Folgezähne (2, 3, ..) aufweist, **dadurch gekennzeichnet, daß** jedenfalls alle Folgezähne (2, 3, ..) im Bereich ihrer Zahnspitzen (28) je eine untereinander unterschiedliche plastische Verformung durch Materialverlagerung in Bandlaufrichtung (24) aufweisen, und daß jeder Folgezahn (2, 3, ..) durch die unterschiedliche plastische Verformung einerseits je einen vergrößerten positiven Spanwinkel (gamma₂, gamma₃, ..) und andererseits jeweils eine gegenüber dem Führungszahn (1) verringerte Zahnhöhe (h₂, h₃, ..) aufweist.

2. Sägeblatt nach Anspruch 1, **dadurch gekennzeichnet, daß** auch der Führungszahn (1) im Bereich seiner Zahnspitze (28) eine im Vergleich zu der Verformung der Folgezähne (2, 3, ..) unterschiedliche plastische Verformung aufweist, so daß er durch die plastische Verformung einerseits einen vergrößerten positiven Spanwinkel (gamma₁) und andererseits gegenüber den Folgezähnen (2, 3, ..) eine vergleichsweise weniger verringerte Zahnhöhe (h₁) aufweist.

3. Sägeblatt nach Anspruch 2, **dadurch gekennzeichnet, daß** der Führungszahn (1) im Bereich seiner Zahnspitze (28) einen positiven Spanwinkel (gamma₁) im Bereich zwischen 5° und 25° - insbesondere etwa 15° - und die Folgezähne (2, 3, ..) im Bereich ihrer Zahnspitzen (28) positive Spanwinkel (gamma₂, gamma₃, ..) im Bereich zwischen 5° und 30° - insbesondere etwa zwischen 17° und 21° - aufweisen.

4. Sägeblatt nach Anspruch 1, **dadurch gekennzeichnet, daß** es zwischen der Zahnhöhe (h₁) des Führungszahns (1) und der Zahnhöhe (h₂) eines Folgezahns (2) eine Höhendifferenz ( 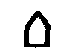 h) im Bereich von etwa 0,05 bis 0,30 mm - insbesondere zwischen 0,08 und 0,15 mm - aufweist.

5. Sägeblatt nach Anspruch 1, **dadurch gekennzeichnet, daß** die geschränkten Folgezähne (2, 3, ..), insbesondere paarweise, auf gestuft angeordnete unterschiedliche Höhenniveaus unterschiedlich plastisch herabgeformt sind, wobei die Stufen abnehmender Höhendifferenzen mit Stufen zunehmender Spanwinkel (gamma₂, gamma₃, ..) und zunehmender Schränkweitendifferenzen kombiniert sind, und zwar bei beliebiger Reihenfolge der Zähne (1, 2, 3, ..) in der Gruppe.

6. Sägeblatt nach einem der Ansprüche 1 bis 5, **dadurch gekennzeichnet, daß** der Phasenwinkel (16) des Führungszahns (1) und die Schränkweite (18) der Folgezähne (2, 3, ..) so aufeinander abgestimmt sind, daß die Belastung des Sägeblattes in etwa gleichmäßig auf die Zähne (1, 2, 3, ..) verteilt ist.

7. Verfahren zur Herstellung eines Sägeblattes mit einer sich wiederholenden Gruppe (6) von Zähnen, die aus einem ungeschränkten gephasten Führungszahn (1) mit einem im Vergleich zu seiner Breite kleineren, in der Mitte seiner Zahnspitze angeordneten wirksamen Schnittkantenabschnitt und einer vorzugsweise geraden Anzahl geschränkter Folgezähne (2, 3, ..) besteht, wobei der Führungszahn (1) eine größere Zahnhöhe (h₁) als jeder der Folgezähne (2, 3, ..) aufweist, **dadurch gekennzeichnet, daß** zunächst die Zähne als Rohzähne (19, 20) profiliert werden, daß dann die Zahnspitzen (28) zumindest der Folgezähne (2, 3, ..) durch Materialverlagerung in Bandlaufrichtung (24) so unterschiedlich plastisch verformt werden, daß jeder Folgezahn (2, 3, ..) durch die unterschiedliche plastische Verformung einerseits je einen vergrößerten positiven Spanwinkel (gamma₂, gamma₃, ..) und andererseits jeweils die gegenüber dem Führungszahn (1) verringerte Zahnhöhe (h₂, h₃) aufweist, und so ein Führungszahn (1) und mehrere Folgezähne (2, 3, ..) in der Gruppe (6) gebildet werden, und daß der oder die Führungszähne (1) in der Gruppe (6) durch Schleifen gephast und die Folgezähne (2, 3, ..) geschränkt werden.

8. Verfahren nach Anspruch 7, **dadurch gekennzeichnet, daß** sämtliche Zähne als Rohzähne (19, 20) mit insbesondere hinsichtlich der Rohzahnhöhe (H) und des Rohspanwinkels (gamma_{R}) übereinstimmender Gestalt profiliert werden, und daß die die Folgezähne (2, 3, ..) bildenden Rohzähne (20) in der Gruppe (6) im Vergleich zum Führungszahn (1) stärker plastisch verformt werden.

9. Verfahren nach Anspruch 7, **dadurch gekennzeichnet, daß** die Zähne als Rohzähne (19, 20) mit insbesondere hinsichtlich der Rohzahnhöhe (H₁, H₂, H₃) unterschiedlicher Gestalt profiliert und so der Führungszahn (1) und die Folgezähne (2, 3, ..) vorgebildet werden, und daß dann die Zahnspitzen (28) des so vorgebildeten Führungszahns (1) und der Folgezähne (2, 3, ..) in der Gruppe (6) so plastisch verformt werden, daß der Führungszahn (1) und jeder Folgezahn (2, 3, ..) in der Gruppe (6) durch die plastische Verformung einerseits einen vergrößerten positiven Spanwinkel (gamma₁, gamma₂, gamma₃, ..) und andererseits die Folgezähne (2, 3, ..) eine gegenüber dem Führungszahn (1) verringerte Zahnhöhe (h₂, h₃, ..) aufweisen.

10. Verfahren nach einem der Ansprüche 7 bis 9, **dadurch gekennzeichnet, daß** die geschränkten Folgezähne (2, 3, ..) nach ihrer Profilierung, insbesondere paarweise, auf gestuft angeordnete unterschiedliche Höhenniveaus unterschiedlich plastisch herabgeformt werden, wobei die Stufen abnehmender Höhendifferenzen mit Stufen zunehmender Spanwinkel (gamma₂, gamma₃, ..) und zunehmender Schränkweitendifferenzen kombiniert werden, und zwar bei Anordnung der Zähne (1, 2, 3, ..) in beliebiger Reihenfolge in der Gruppe.

## Claims

1. A saw blade, including a group (6) of recurring teeth (1, 2, 3, ..), the group (6) including at least one unset leading tooth (1) being provided with a phase and having an effective cutting-edge section, which is arranged in the middle of its tip and which is smaller than its width, and a preferably even number of trailing teeth (2, 3, ..), the leading tooth (1) having a larger height than all of the trailing teeth (2, 3, ..), **wherein** at least all of the trailing teeth (2, 3, ..) include a different plastic deformation at their tips (28) by displacements of material in the running direction (24) of the saw blade, and each of the trailing teeth (2, 3, ..) has both a positive enlarged rake angle (gamma₂, gamma₃, ..) and a reduced height (h₂, h₃, ..) with respect to the leading tooth (1) produced by different plastic deformations.

2. Saw blade of claim 1, **wherein** the at least one leading tooth (1) includes a plastic deformation of its tip (28), the plastic deformation being different from the plastic deformation of the trailing teeth (2, 3, ..), so that the leading tooth (1) has both a positive enlarged rake angle (gamma₁) and a reduced height (h1) being larger than the reduced heights of each of the trailing teeth (2, 3, ..).

3. Saw blade of claim 2, **wherein** the at least one leading tooth (1) includes the positive enlarged rake angle (gamma₁) at its tip (28) in the range between about 5° and 25° - especially about 15° - and the trailing teeth (2, 3, ..) include positive enlarged rake angles (gamma₂, gamma₃, ..) in the range between about 5° and 30° - especially between 17° and 21° -.

4. Saw blade of claim 1, **wherein** a height difference (Δh) exists between the height (h₁) of the leading tooth (1) and the height (h₂) of a trailing tooth (2) in the range of about 0,05 mm to 0,30 mm - especially between 0,08 and 0,15 mm -.

5. Saw blade of claim 1, **wherein** the set trailing teeth (2, 3, ..), especially pair for pair, are swaged differently to be positioned on different height levels, the different height levels being arranged in steps, the steps combining decreasing height with increasing rake angles (gamma₂, gamma₃, ..) and increasing setting width, while the succession of the teeth (1, 2, 3, ..) in the group is in any order whatever.

6. Saw blade of claim 1, **wherein** the phase angle (16) of the leading tooth (1) and the setting widths (18) of the trailing teeth (2, 3, ..) are combined to each other in a manner so that the load and the stresses of the saw blade is distributed substantially equally to all of the teeth (1, 2, 3, ..).

7. A method for the production of a saw blade including a group (6) of recurring teeth, the group (6) including at least one unset leading tooth (1) being provided with a phase and having an effective cutting-edge section, which is arranged in the middle of its tip and which is smaller than its width, and a preferably even number of trailing teeth (2, 3, ..), the leading tooth (1) having a larger height than all of the trailing teeth (2, 3, ..), **wherein**, first all of the teeth are profiled to form raw teeth (19, 20), then the tips (28) at least of the trailing teeth (2, 3, ..) are plastically deformed by displacement of material with respect to the running direction (24) of the saw blade in different manner each so that each trailing tooth (2, 3, ..) include both a positive enlarged rake angle (gamma₂, gamma₃, ..) and a height (h₂, h₃) being smaller than the height (h₁) of the leading tooth (1), thus at least one leading tooth (1) and a number of trailing teeth (2, 3, ..) are formed in the group (6), finally the one or the more leading teeth (1) in the group (6) is provided with a phase by milling and the trailing teeth (2, 3, ..) are set.

8. Method of claim 7, **wherein** all of the teeth are profiled with common shape to form raw teeth (19, 20) having especially the same raw height (H) and the same raw rake angle (gamma_{R}), and the raw teeth (20) designed to form the trailing teeth (2, 3, ..) are plastically deformed to a larger extent than the leading tooth (1).

9. Method of claim 7, **wherein** all of the teeth are profiled with different shape to form raw teeth (19, 20) having especially different heights (H₁, H₂, H₃) and thus the leading tooth (1) and the trailing teeth (2, 3, ..) are preformed, and afterwards the tip (28) of the so preformed leading tooth (1) and the tips (28) of the so preformed trailing teeth (2, 3, ..) in the group (6) are plastically deformed in a manner so that the leading tooth (1) and each of the trailing teeth (2, 3, ..) in the group (6) include both an enlarged positive rake angle (gamma₁, gamma₂, gamma₃, ..) and a reduced height (h₂, h₃, ..) with respect to the height of the leading tooth (1).

10. Method of one of the claims 7 to 9, wherein the trailing teeth (2, 3, ..) especially pair by pair after their profiling are swaged to be positioned on different height levels arranged in steps, the steps of decreasing height differences being combined with steps of increasing rake angles (gamma₂, gamma₃, ..) and increasing setting width differences, while the succession of the teeth (1, 2, 3, ..) in the group is in any order whatever.

## Revendications

1. Lame de scie avec un groupe (6) se répétant de dents (1, 2, 3, ...), qui est constitué d'une dent de guidage (1) biseautée, non avoyée, avec un tronçon de bord de coupe utile, plus petit par rapport à sa largeur, disposé au milieu de sa pointe, et d'un nombre de préférence pair de dents successives (2, 3,...) avoyées, la dent de guidage (1) présentant une plus grande hauteur que chacune des dents successives (2, 3,...), **caractérisée en ce que** dans tous les cas toutes les dents successives (2, 3,...) présentent, dans la zone de leurs pointes (28), chacune une déformation plastique différente les unes des autres, par déplacement de matière dans le sens de passage de la bande (24), et **en ce que** chaque dent successive (2, 3, ...) présente, du fait de la déformation plastique différente, d'une part un angle de coupe positif (gamma₂, gamma₃, ....) agrandi et d'autre part une hauteur de dent (h₂, h₃, ...) réduite par rapport à la dent de guidage (1).

2. Lame de scie selon la revendication 1, **caractérisée en ce que** la dent de guidage (1) présente aussi, dans la zone de sa pointe (28), une déformation plastique différente de la déformation des dents successives (2, 3,...), de sorte que, du fait de la déformation plastique, elle présente d'une part un angle de coupe positif (gamma₁) agrandi et d'autre part, par rapport aux dents successives (2, 3,...) une hauteur de dent (h₁) relativement moins réduite.

3. Lame de scie selon la revendication 2, **caractérisée en ce que** la dent de guidage (1) présente, dans la zone de sa pointe (28), un angle de coupe positif (gamma₁) compris entre 5° et 25° - en particulier d'environ 15° - et les dents successives (2, 3,...) présentent dans la zone de leurs pointes (28), des angles de coupe positifs (gamma₂, gamma₃,...) compris entre 5° et 30° - en particulier entre 17° et 21° environ -.

4. Lame de scie selon la revendication 1, **caractérisée en ce qu'**elle présente, entre la hauteur de dent (h₁) de la dent de guidage (1) et la hauteur de dent (h₂) d'une dent successive (2), une différence de hauteur (Δₕ) comprise entre environ 0,05 et 0,30 mm - en particulier entre 0,08 et 0,15 mm -.

5. Lame de scie selon la revendication 1, **caractérisée en ce que** les dents successives (2, 3, ...) avoyées, en particulier deux par deux, sont réduites plastiquement différemment à des niveaux de hauteur différents disposés échelonnés, les échelons de différence de hauteur décroissante étant combinés à des échelons d'angle de coupe croissant (gamma₂, gamma₃, ...) et de différence croissante d'ouverture d'avoyage, et ce pour une succession quelconque des dents (1, 2, 3,...) dans le groupe.

6. Lame de scie selon l'une des revendications 1 à 5, **caractérisée en ce que** l'angle de biseau (16) de la dent de guidage (1) et l'ouverture d'avoyage (18) des dents successives (2, 3...) sont adaptés l'un à l'autre de manière que la charge pesant sur la lame de scie soit répartie approximativement régulièrement entre les dents (1, 2, 3, ...).

7. Procédé de fabrication d'une lame de scie avec un groupe (6) se répétant de dents (1, 2, 3, ...), qui est constitué d'une dent de guidage (1) biseautée, non avoyée, avec un tronçon de bord de coupe utile, plus petit par rapport à sa largeur, disposé au milieu de sa pointe, et d'un nombre de préférence pair de dents successives (2, 3,...) avoyées, la dent de guidage (1) présentant une plus grande hauteur que chacune des dents successives (2, 3,...), **caractérisé en ce que** les dents sont d'abord profilées comme des dents brutes (19, 20), **en ce qu'**ensuite les pointes (28) au moins des dents successives (2, 3,...) sont déformées plastiquement différemment, par déplacement de matière dans le sens de défilement de la bande (24), de manière que chaque dent successive (2, 3,...) présente, du fait de la déformation plastique différente, un angle de coupe positif (gamma₂, gamma₃, ...) agrandi et d'autre part la hauteur de dent (h₂, h₃) réduite par rapport à la dent de guidage (1), et il est ainsi formé dans le groupe (6) une dent de guidage (1) et plusieurs dents successives (2, 3, ...), et **en ce que** la ou les dents de guidage (1) du groupe (6) sont biseautées par meulage et les dents successives (2, 3, ...) sont avoyées.

8. Procédé selon la revendication 7, **caractérisé en ce que** toutes les dents sont profilées comme dents brutes (19, 20) avec une forme coïncidant en particulier en ce qui concerne la hauteur (H) de la dent brute et l'angle de coupe brut (gamme_{R}), et **en ce que** les dents brutes (20) formant les dents successives (2, 3,...) du groupe (6) sont déformées plastiquement plus fortement que la dent de guidage (1).

9. Procédé selon la revendication 7, **caractérisé en ce que** les dents sont profilées comme dents brutes (19, 20) avec en particulier une forme différente en ce qui concerne la hauteur (H1, H2, H3) de la dent brute, et la dent de guidage (1) et les dents successives (2, 3, ...) sont ainsi préparées, et ce qu'ensuite les pointes (28) de la dent de guidage (1) et des dents successives (2, 3,...) ainsi préformées du groupe (6) sont déformées plastiquement de manière que la dent de guidage (1) et chaque dent successive (2, 3, ...) du groupe (6) présentent, du fait de la déformation plastique, d'une part un angle de coupe positif (gamma₁, gamma₂, gamma₃, ...) agrandi et d'autre part les dents successives (2, 3, ...) présentent une hauteur de dent (h₂, h₃, ...) réduite par rapport à la dent de guidage (1).

10. Procédé selon l'une des revendications 7 à 9, **caractérisé en ce que** les dents successives (2, 3, ...) avoyées sont réduites plastiquement différemment suivant leur profilage, en particulier deux par deux, à des niveaux de hauteur différents disposés échelonnés, les échelons d'angle de coupe croissant (gamma₂, gamma₃, ...) et de différence croissante d'ouverture d'avoyage étant combinés, et ce avec disposition des dents (1, 2, 3, ...) dans une succession quelconque dans le groupe.
